# EUROPÄISCHE PATENTSCHRIFT

(11) **EP 3 179 088 B1**
(45) Veröffentlichungstag und Bekanntmachung des Hinweises auf die Patenterteilung: **08.05.2019**
(21) Anmeldenummer: 16194811.2
(22) Anmeldetag: 20.10.2016
(51) Int. Cl.: F02M 51/06, F16K 31/00

(54) **DOSIERVORRICHTUNG FÜR EIN ELEKTRISCH ISOLIERENDES MEDIUM**
DOSING DEVICE FOR AN ELECTRICALLY INSULATING MEDIUM
DISPOSITIF DE DOSAGE POUR UN MILIEU ÉLECTRO-ISOLANT

(30) Priorität: 08.12.2015 DE 102015224554
(43) Veröffentlichungstag der Anmeldung: 14.06.2017
(73) Patentinhaber: ROBERT BOSCH GMBH, 70442 Stuttgart (DE)
(72) Erfinder: WESSNER, Jochen, 73728 Esslingen (DE); KATZ, Martin, 70469 Stuttgart (DE)

(56) Entgegenhaltungen:
- DE-A1- 19 947 779
- JP-A- S62 243 964
- US-A1- 2009 057 438

## Beschreibung

Die vorliegende Erfindung betrifft eine Dosiervorrichtung für ein elektrisch isolierendes Medium, die insbesondere als Injektor für einen flüssigen oder gasförmigen Fahrzeugkraftstoff verwendbar ist.

### Stand der Technik

Ein Injektor für einen Fahrzeugkraftstoff umfasst typischerweise eine Düse mit einer Düsennadel. Die Durchflussrate des Mediums durch die Düse ist über eine Linearbewegung der Düsennadel steuerbar. Dabei wird die Düsennadel meistens durch eine Federkraft in einer Schließstellung gehalten und zum Einspritzen von Kraftstoff durch eine Kraftausübung gegen diese Federkraft bewegt.

Die Kraft für die Bewegung der Düsennadel wird durch einen Aktor aufgebracht. Aus der DE 10 2013 225 376 A1 ist ein Injektor mit einem elektromagnetischen Aktor bekannt. Aus der WO 2014 / 067 720 A1 ist ein Injektor mit einem piezoelektrischen Aktor bekannt. Der Aktor ist jeweils räumlich von der Düsennadel abgesetzt und überträgt die Kraft über eine Kopplungseinrichtung auf die Düsennadel. Aus der US 2009 / 0057438 A1 ist weiterhin ein Injektor bekannt, bei dem die Düsennadel durch einen Piezoaktor in Ultraschallschwingungen versetzt werden kann.

### Offenbarung der Erfindung

Im Rahmen der Erfindung wurde eine Dosiervorrichtung für ein elektrisch isolierendes flüssiges oder gasförmiges Medium entwickelt. Diese Dosiervorrichtung umfasst eine Düse mit einer Düsennadel, wobei die Durchflussrate des Mediums durch die Düse über eine Linearbewegung der Düsennadel steuerbar ist. Vorteilhaft kann diese Linearbewegung mindestens von einer Schließstellung, in der die Düsennadel mindestens eine Austrittsöffnung für das Medium aus der Düse vollständig blockiert, in eine Öffnungsstellung führen, in der das Medium die Austrittsöffnung ungehindert passieren kann. Die Erfindung betrifft ein Dosiervorrichtung für eine elektrisch isolierendes flüssiges oder gasförmiges Medium gemäß dem unabhängigen Vorrichtungsanspruchs 1.

Dabei schließt der Begriff des Reibkontakts ausdrücklich auch ein, dass beispielsweise das Piezoelement, und/oder die Düsennadel, mit einer Beschichtung versehen sind und dass auf einer oder auf beiden Seiten des Reibkontakts eine derartige Beschichtung den Kraftschluss herstellt.

Beiden Ausgestaltungen ist gemein, dass eine Kopplungseinrichtung zwischen dem jeweiligen Aktor und der Düsennadel entfällt. Stattdessen ist jeweils ein Reibkontakt zwischen mindestens einem Piezoelement und der Düsennadel herstellbar. Dies bringt zunächst den scheinbaren Nachteil mit sich, dass das Piezoelement nunmehr in dem Bereich angeordnet ist, der unter dem vollen Einspritzdruck des Mediums steht, was die Komplexität des Aufbaus erhöht. Es wurde jedoch erkannt, dass Änderungen der Durchflussrate durch den Wegfall der Kopplungseinrichtung wesentlich schneller erfolgen können und der scheinbare Nachteil einer erhöhten Komplexität deutlich überkompensiert wird. Durch die verbesserte Schaltgeschwindigkeit können vorgegebene Zeitprogramme für die Durchflussrate wesentlich genauer abgebildet werden. Insbesondere bei Fahrzeugmotoren, deren Kraftstoffzufuhr über Injektoren gesteuert wird, kommt es für die Verbrauchs- und Umwelteigenschaften des gesamten Motors entscheidend darauf an, dass genaue Zeitprogramme für die Einspritzung eingehalten werden. Weiterhin wird durch die direkte Kopplung des Piezoelements an die Düsennadel die Neigung der Düsennadel, entlang ihrer Längsachse zu Schwingungen angeregt zu werden, unterdrückt.

Schließlich fällt auch die Notwendigkeit weg, zur Kraftübertragung vom Aktor auf die Düsennadel eine Steuermenge in der Düse umzuwälzen. Es ist insbesondere nicht mehr notwendig, diese Steuermenge ausgehend von einem Steuerraum durch variable Querschnitte und diverse Drosseln zu führen.

Weiterhin ermöglichen die gemäß der Erfindung vorgesehenen Aktoren nicht nur ein Ein- und Ausschalten eines Durchflusses des Mediums durch die Düse, sondern auch eine präzise Formung des zeitlichen Verlaufs dieser Durchflussrate. Dies ist insbesondere bei Injektoren für Fahrzeugkraftstoffe vorteilhaft, da bei modernen Motoren ein einzelner Einspritzzyklus in eine Vielzahl von Teileinspritzungen aufgeteilt ist.

Ermöglicht wird dies durch den Reibkontakt zwischen mindestens einem Piezoelement und der Düsennadel, der die Düsennadel nicht nur bewegen, sondern auch durch Haftreibung in einer Position festhalten kann. Dadurch kann beispielsweise auch eine Feder, die die Düsennadel in eine Schließstellung vorspannt, entbehrlich werden.

In einer besonders vorteilhaften Ausgestaltung der Erfindung ist eine Steuereinheit für das Piezoelement, bzw. für die Piezoelemente, vorgesehen. Diese Steuereinheit ist dazu ausgebildet, mindestens einen Punkt auf einem Piezoelement, der in einen Reibkontakt mit der Düsennadel überführbar ist, zu einer Bewegung auf einem zweidimensionalen geschlossenen Weg anzuregen. Dieser Weg kann insbesondere beispielsweise eine Ellipse sein, deren erste Halbachse beispielsweise in Richtung der Längsachse der Düsennadel verläuft und deren zweite Halbachse beispielsweise senkrecht hierzu auf die Längsachse der Düsennadel gerichtet ist.

Eine derartige Ansteuerung vereint den von Piezo-Direktantrieben bekannten Vorteil, dass bei einem direkten Kraftschluss zwischen mindestens einem Piezoelement und der Düsennadel eine große Kraft ausübbar ist, mit dem von Piezo-Trägheitsantrieben bekannten Vorteil, dass eine Bewegung über beliebige makroskopische Distanzen möglich ist. Ein herkömmlicher Piezo-Direktantrieb ist auf einen Verstellweg in der Größenordnung weniger Mikrometer limitiert, weil die spezifische Längenänderung typischer Piezoelemente nur wenige Nanometer pro Volt anliegender Spannung beträgt. Die maximal nutzbare Spannung wiederum ist durch die Tendenz von Piezoelementen, bei zu hoher Spannung zu depolarisieren, limitiert. Ein herkömmlicher Piezo-Trägheitsantrieb nutzt den beschränkten Verstellweg eines Piezoelements immer und immer wieder, indem nach einem Verstellhub das Piezoelement schnell gegenüber der Düsennadel zurückgezogen und anschließend zu einem neuen Verstellhub angesetzt wird. Da das Piezoelement bei diesem Zurückziehen jedoch gegen die Düsennadel gleiten muss, ist die maximale Haftreibung zwischen Piezoelement und Düsennadel, die für die beim Verstellhub ausübbare Kraft maßgeblich ist, beschränkt. Die Erfindung beseitigt diese Beschränkung, da eine Relativbewegung zwischen dem Piezoelement und der Düsennadel über eine Aufhebung des Reibkontakts zwischen Piezoelement und Düsennadel ermöglicht wird und kein Gleiten mehr erforderlich ist.

In einer besonders vorteilhaften Ausgestaltung der Erfindung sind mindestens zwei Piezoelemente beiderseits der Düsennadel gegenüberliegend angeordnet. Dann lässt sich die Düsennadel zwischen diesen zwei Piezoelementen festklemmen, indem beide Piezoelemente in Reibkontakt mit der Düsennadel überführt werden. Sind beispielsweise entlang der Längsachse der Düsennadel mindestens zwei derartige Paare von Piezoelementen angeordnet, so können diese Paare abwechselnd in den Reibkontakt mit der Düsennadel gehen und die Düsennadel jeweils entlang ihrer Längsachse mitnehmen. Bevor der Reibkontakt eines der Paare mit der Düsennadel unterbrochen wird, stellt das andere Paar den Reibkontakt zur Düsennadel her und nimmt die Düsennadel wiederum mit. Die Düsennadel wird also gleichsam immer von einem Paar gegenüberliegend angeordneter Piezoelemente zum nächsten durchgereicht.

In einer weiteren besonders vorteilhaften Ausgestaltung der Erfindung ist mindestens ein Klemmelement vorgesehen, welches eine zwischen mindestens einem Piezoelement und der Düsennadel, und/oder zwischen der Düsennadel und mindestens einem Lager, auf dem die Düsennadel aufliegt, wirkende Normalkraft F_{N} ausübt. Wirkt die Normalkraft F_{N} zwischen dem Piezoelement und der Düsennadel, so erhöht sie die Haftreibung des Reibkontakts, und damit die beim Vorschub der Düsennadel durch diesen Reibkontakt ausübbare Kraft. Wirkt die Normalkraft F_{N} zwischen der Düsennadel und einem Lager, auf dem die Düsennadel aufliegt, so kann dieses Lager ein Einklemmen der Düsennadel zwischen zwei Piezos ersetzen.

In einer weiteren besonders vorteilhaften Ausgestaltung der Erfindung ist zusätzlich mindestens ein Stützelement vorgesehen, das die Düsennadel umläuft, wobei das Klemmelement das Stützelements gegen mindestens ein Piezoelement, und/oder gegen mindestens einen Biegebalken, drückt. Dieses Stützelement kann die beim Vorschub der Düsennadel entstehenden Reaktionskräfte abstützen.

Dabei muss das Stützelement die Düsennadel nicht vollständig umlaufen, sondern kann auch an einer oder mehreren Stellen unterbrochen sein. Insbesondere kann das Stützelement zweiteilig ausgeführt sein, wobei das Klemmelement dann beide Teile des Stützelements gegen mindestens ein Piezoelement, und/oder gegen mindestens einen Biegebalken, drückt. Besonders vorteilhaft sind das Piezoelement, und/oder der Biegebalken, dann zwischen den beiden Teilen des Stützelements eingespannt, so dass sie durch die Rückstellkraft des Klemmelements in eine definierte Ruhelage zurück getrieben werden.

Nach dem zuvor Gesagten ist die Dosiervorrichtung gemäß der Erfindung besonders bevorzugt als Injektor für einen flüssigen oder gasförmigen Fahrzeugkraftstoff, wie beispielsweise Dieselkraftstoff oder Erdgas, verwendbar. Der Injektor kann beispielsweise in einem Zylinderkopf angeordnet sein und den Fahrzeugkraftstoff unmittelbar in den Brennraum eines Zylinders einspritzen. Der Injektor kann aber auch beispielsweise ein Gasventil sein, das in einer zu dem Zylinderkopf führenden Zuleitung angeordnet ist und den Fahrzeugkraftstoff im gasförmigen Aggregatzustand eindosiert. Erdgas als Fahrzeugkraftstoff ist insoweit besonders vorteilhaft, als es die Eigenschaften des Reibkontakts zwischen dem Piezoelement und der Düsennadel nicht beeinflusst.

Vorteilhaft weist die Düsennadel einen runden Querschnitt auf, der in dem Bereich, in dem das Piezoelement, bzw. die Piezoelemente, in einen Reibkontakt mit der Düsennadel überführbar sind, abgeflacht ist. Dann wird die Kontaktfläche, und somit die vom Piezoelement auf die Düsennadel übertragbare Kraft, maximiert.

Weitere, die Erfindung verbessernde Maßnahmen werden nachstehend gemeinsam mit der Beschreibung der bevorzugten Ausführungsbeispiele der Erfindung anhand von Figuren näher dargestellt.

### Ausführungsbeispiele

Es zeigt:
Figur 1 Ausführungsbeispiel der Dosiervorrichtung 1 gemäß der Erfindung in Schnittzeichnung;
Figur 2 Aufsicht auf ein weiteres Ausführungsbeispiel der Dosiervorrichtung 1 mit Klemmelement 12 und Stützelement 13;
Figur 3 Perspektivische Darstellung des Zusammenwirkens eines abgeflachten Bereichs 4c an der Düsennadel 4 mit Piezoelementen 5 und 6;
Figur 4 Zusammenwirken eines Lagers 14a, 14b für die Düsennadel 4 mit einem Klemmelement 12.

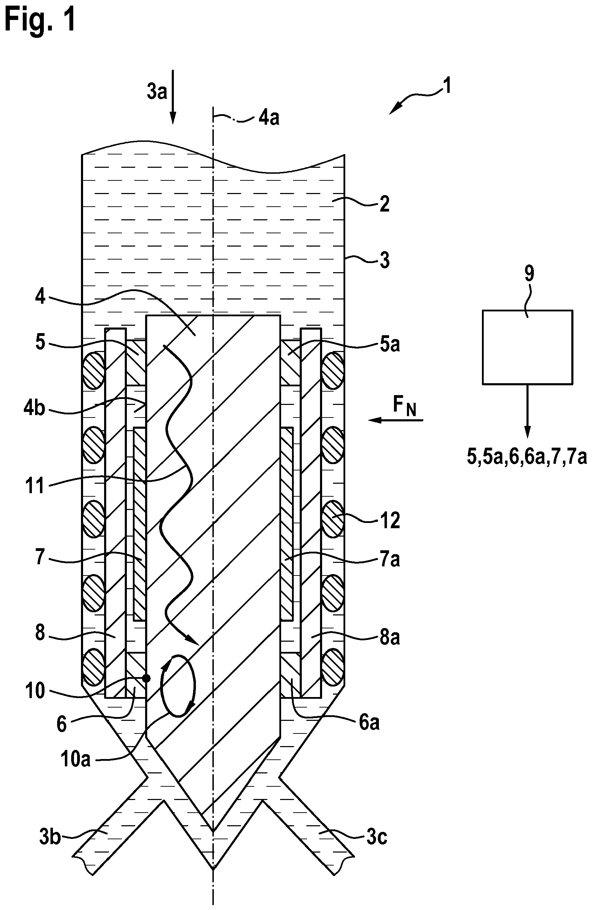

Nach Figur 1 umfasst die Dosiervorrichtung 1 eine Düse 3 mit einem Einlass 3a sowie zwei Auslässen 3b und 3c für das Medium 2. Durch die Linearbewegung einer Düsennadel 4 entlang ihrer Längsachse 4a können die beiden Auslässe 3b und 3c der Düse 3 geöffnet, beziehungsweise ganz oder teilweise für den Durchtritt des Mediums 2 blockiert, werden.

Als Aktoren für diese Linearbewegung dienen die Piezoelemente 5, 5a, 6, 6a, 7 und 7a. Dabei sind die Piezoelemente 5 und 6 durch einen ersten Biegebalken 8 miteinander gekoppelt. Die Piezoelemente 5a und 6a sind durch einen zweiten Biegebalken 8a miteinander gekoppelt.

Sämtliche Piezoelemente 5, 5a, 6, 6a, 7 und 7a lassen sich über die Steuereinheit 9 so ansteuern, dass sie intermittierend in einen Reibkontakt mit der Mantelfläche 4b der Düsennadel 4 überführbar sind. Dabei werden die auf gegenüberliegenden Seiten der Düsennadel 4 angeordneten Piezoelemente 5 und 5a, 6 und 6a beziehungsweise 7 und 7a jeweils synchron angesteuert, so dass sie die Düsennadel 4 jeweils von beiden Seiten einklemmen und festhalten. Die Ansteuerung der Piezoelemente 6 und 6a ist darüber hinaus mit der Ansteuerung der Piezoelemente 5 und 5a zeitlich so koordiniert, dass der beispielhaft eingezeichnete Punkt 10 auf der der Düsennadel zugewandten Fläche des Piezoelements 6 eine Bewegung auf dem elliptischen Weg 10a in der Zeichenebene vollführt. Die Piezoelemente 7 und 7a werden durch die Steuereinheit 9 jeweils zu einer Kombination aus einer Längenausdehnung parallel zur Längsachse 4a der Düsennadel 4 und einer Biegeschwingung 11 angeregt, so dass durch die Biegeschwingung 11 jeweils ein intermittierender Reibkontakt zwischen den Piezoelementen 7 und 7a einerseits und der Düsennadel 4 andererseits herstellbar ist. Die Düsennadel 4 wird jeweils von gegenüberliegenden Piezoelementen 5 und 5a, 6 und 6a beziehungsweise 7 und 7a, die gleichzeitig im Reibkontakt mit der Düsennadel 4 stehen, in der gewünschten Bewegungsrichtung entlang der Längsachse 4a der Düsennadel 4 mitgenommen. Die Steuerleitungen zwischen der Steuereinheit 9 und den Piezoelementen 5, 5a, 6, 6a, 7 und 7a sind in Figur 1 aus Gründen der Übersichtlichkeit nicht eingezeichnet.

Es ist ein Klemmelement 12 vorgesehen, das als Spiralfeder ausgebildet ist und eine radial nach innen gerichtete Normalkraft F_{N} ausübt. Über die Biegebalken 8 bzw. 8a wird diese Normalkraft F_{N} an die Kontaktflächen zwischen den Piezoelementen 5 und 6, bzw. 5a und 6a, einerseits und der Düsennadel 4 andererseits weitergegeben. Das Klemmelement 12 ist an der Düse 4 fixiert und bildet so ein Widerlager für die durch die Piezoelemente 5, 5a, 6 und 6a bewirkte Linearbewegung der Düsennadel 4. Die Fixierung der Piezoelemente 7 und 7a an der Düsennadel 4 ist aus Gründen der Übersichtlichkeit in Figur 1 nicht eingezeichnet.

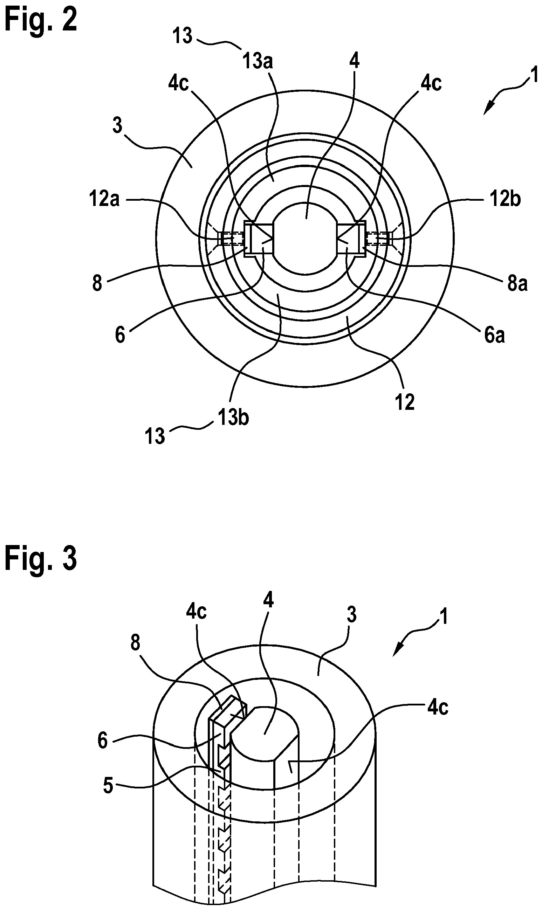

Figur 2 zeigt ein weiteres Ausführungsbeispiel der Dosiervorrichtung 1 in Aufsicht. In dieser Perspektive sind nur zwei Piezoelemente 6 und 6a sowie die oberen Enden der Biegebalken 8 und 8a, an die diese Piezoelemente 6 und 6a gekoppelt sind, sichtbar. Der Querschnitt der Düsennadel 4 ist rund und weist zwei abgeflachte Bereiche 4c auf, die sich gegenüber liegen und als Zweiflach an die Düsennadel 4 angeschliffen wurden.

Die Piezoelemente 6 und 6a sind zusammen mit den Biegebalken 8 und 8a in einem aus zwei Teilen 13a und 13b bestehenden ringförmigen Stützelement 13 eingefasst. Durch eine Spiralfeder als Klemmelement 12 werden die beiden Teile 13a und 13b des Stützelements 13 radial nach innen zusammengedrückt. Dabei werden zugleich die Piezoelemente 6 und 6a an die abgeflachten Bereiche 4c der Düsennadel 4 angedrückt. Die Andruckkraft ist über Vorspannschrauben 12a und 12b einstellbar, die durch Gewinde im Klemmelement 12 geführt und an den Piezoelementen 6 bzw. 6a abgestützt sind.

Figur 3 zeigt das Zusammenwirken eines abgeflachten Bereichs 4c an der Düsennadel 4 mit beispielhaft eingezeichneten Piezoelementen 5 und 6 in perspektivischer Darstellung. Die Piezoelemente 5 und 6 sind über einen Biegebalken 8 miteinander gekoppelt. Der Übersichtlichkeit halber sind in Figur 3 ein weiterer Biegebalken 8a mit weiteren Piezoelementen 5a und 6a, ein Stützelement 13 und ein Klemmelement 12 weggelassen.

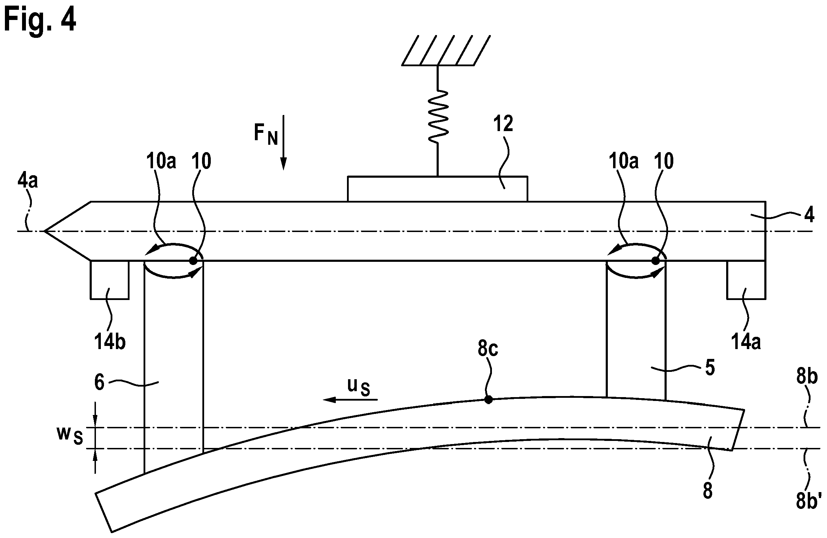

Figur 4 zeigt, wie ein Lager 14a, 14b für die Düsennadel 4 das Einklemmen der Düsennadel 4 zwischen gegenüberliegenden Piezoelementen 5 und 5a, 6 und 6a beziehungsweise 7 und 7a ersetzen kann. Zwei Piezoelemente 5 und 6 sind entlang der Längsachse 4a der Düsennadel 4 versetzt und über einen Biegebalken 8 miteinander gekoppelt. Dabei ist die Ansteuerung der Piezoelemente 5 und 6 zeitlich so koordiniert, dass jeweils ein beispielhaft eingezeichneter Punkt 10 auf jedem der beiden Piezoelemente 5 und 6 eine elliptische Bewegung entlang eines Weges 10a in der Zeichenebene vollführt. Dabei sind die Piezoelemente 5 und 6 abwechselnd in Reibkontakt mit der Düsennadel 4. In dem Moment, in dem das eine der Piezoelemente 5, 6 den Reibkontakt mit der Düsennadel 4 verlässt und das andere Piezoelement 5, 6 noch nicht im Reibkontakt mit der Düsennadel 4 ist, wird die Düsennadel 4 durch die zwischen der Düsennadel 4 und dem Lager 14a, 14b wirkende Normalkraft F_{N} in Position gehalten. Diese Normalkraft F_{N} wird durch das Klemmelement 12, das mit einer Druckfeder vorgespannt ist, ausgeübt.

Der in Figur 4 gezeigte Aufbau ist konstruktiv einfacher als eine Anordnung, in der jeweils Paare 5 und 5a, 6 und 6a beziehungsweise 7 und 7a von gegenüberliegenden Piezoelementen vorgesehen sind. Dafür kann bei der Linearbewegung der Düsennadel 4 nur eine geringere Vorschubkraft ausgeübt werden, da die Düsennadel 4 durch das Klemmelement 12 nicht fest eingespannt ist.

Figur 4 verdeutlich weiterhin das Grundprinzip, nach dem die Kopplung der beiden Piezoelemente 5 und 6 über den Biegebalken 8 zu einer Bewegung der Punkte 10 entlang elliptischer Bahnen 10a führt. Im nicht durchgebogenen, geraden Zustand entspricht die Schwerpunktlinie des Biegebalkens 8 der gestrichpunkteten Linie 8b. Die in Figur 4 stark übertrieben eingezeichnete Durchbiegung verschiebt diese Schwerpunktlinie um einen Betrag ws nach unten auf die gestrichelte Linie 8b'. Dadurch wandert ein vorgegebener Punkt 8c auf dem Biegebalken 8 um den Betrag us in horizontaler Richtung. Indem der Biegebalken 8 an der in Figur 4 nicht eingezeichneten Düse 3 fixiert ist, wird diese Wanderung in eine horizontale Vorschubkraft auf die Düsennadel 4 umgesetzt. Der Biegebalken 8 kann insbesondere ein Euler-Bernoulli-Balken sein.

## Patentansprüche

1. Dosiervorrichtung (1) für ein elektrisch isolierendes flüssiges oder gasförmiges Medium (2), umfassend eine Düse (3) mit einer Düsennadel (4), wobei die Durchflussrate des Mediums (2) durch die Düse (3) über eine Linearbewegung der Düsennadel (4) steuerbar ist, **dadurch gekennzeichnet, dass** als Aktor für die Linearbewegung der Düsennadel (4)
• mindestens zwei entlang der Längsachse (4a) der Düsennadel (4) versetzte Piezoelemente (5, 6; 5a, 6a), die zu einer linearen, auf die Mantelfläche (4b) der Düsennadel (4) gerichteten, Längenänderung anregbar sind, wobei durch diese Längenänderung jeweils ein Reibkontakt zwischen den Piezoelementen (5, 6; 5a, 6a) und der Düsennadel (4) herstellbar bzw. aufhebbar ist und wobei die Piezoelemente (5, 6; 5a, 6a) über einen parallel zur Düsennadel (4) verlaufenden Biegebalken (8; 8a) miteinander gekoppelt sind, und
• mindestens ein Piezoelement (7; 7a), das zu einer Kombination aus einer Längenausdehnung parallel zur Längsachse (4a) der Düsennadel (4) und einer Biegeschwingung anregbar ist, so dass durch die Biegeschwingung ein intermittierender Reibkontakt zwischen dem Piezoelement (7; 7a) und der Düsennadel (4) herstellbar ist,
vorgesehen sind,
wobei eine Steuereinheit (9) für die Piezoelemente (5, 6; 5a, 6a), bzw. für das Piezoelement (7, 7a), vorgesehen ist und wobei diese Steuereinheit (9) dazu ausgebildet ist, eine sich entlang des Biegebalkens (8, 8a) ausbreitende Wanderwelle (11) zu erzeugen..

2. Dosiervorrichtung (1) nach Anspruch 1, **dadurch gekennzeichnet, dass** eine Steuereinheit (9) für die Piezoelemente (5, 6; 5a, 6a), bzw. für das Piezoelement (7; 7a), vorgesehen ist, wobei diese Steuereinheit (9) dazu ausgebildet ist, mindestens einen Punkt (10) auf einem Piezoelement (5, 6, 5a, 6a, 7, 7a), der in einen Reibkontakt mit der Düsennadel (4) überführbar ist, zu einer Bewegung auf einem zweidimensionalen geschlossenen Weg (10a) anzuregen.

3. Dosiervorrichtung (1) nach einem der Ansprüche 1 bis 2, **dadurch gekennzeichnet, dass** mindestens zwei Piezoelemente (5, 5a; 6, 6a; 7, 7a) beiderseits der Düsennadel (4) gegenüberliegend angeordnet sind.

4. Dosiervorrichtung (1) nach einem der Ansprüche 1 bis 3, **dadurch gekennzeichnet, dass** mindestens ein Klemmelement (12, 12a, 12b) vorgesehen ist und dazu ausgebildet ist, dass es eine zwischen mindestens einem Piezoelement (5, 6, 5a, 6a, 7, 7a) und der Düsennadel (4), und/oder zwischen der Düsennadel (4) und mindestens einem Lager (14a, 14b), auf dem die Düsennadel (4) aufliegt, wirkende Normalkraft F_{N} ausübt.

5. Dosiervorrichtung (1) nach Anspruch 4, **dadurch gekennzeichnet, dass** zusätzlich mindestens ein Stützelement (13, 13a, 13b) vorgesehen ist, das die Düsennadel (4) umläuft, wobei das Klemmelement (12, 12a, 12b) das Stützelements (13, 13a, 13b) gegen mindestens ein Piezoelement (5, 6, 5a, 6a, 7, 7a), und/oder gegen mindestens einen Biegebalken (8, 8a), drückt.

6. Dosiervorrichtung (1) nach Anspruch 5, **dadurch gekennzeichnet, dass** das Stützelement (13, 13a, 13b) zwei Teile (13a, 13b) aufweist und das Klemmelement beide Teile (13a, 13b) des Stützelements (13a, 13b) gegen mindestens ein Piezoelement (5, 6, 5a, 6a, 7, 7a), und/oder gegen mindestens einen Biegebalken (8, 8a), drückt.

7. Injektor für einen flüssigen oder gasförmigen Fahrzeugkraftstoff (2) als Dosiervorrichtung (1) nach einem der Ansprüche 1 bis 6.

8. Injektor nach Anspruch 7, **dadurch gekennzeichnet, dass** die Düsennadel (4) einen runden Querschnitt aufweist, der in dem Bereich (4c), in dem das Piezoelement (7; 7a), bzw. die Piezoelemente (5, 6; 5a, 6a), in einen Reibkontakt mit der Düsennadel (4) überführbar sind, abgeflacht ist.

## Claims

1. Dosing device (1) for an electrically insulating liquid or gaseous medium (2), comprising a nozzle (3) with a nozzle needle (4), wherein the through-flow rate of the medium (2) can be controlled by the nozzle (3) by means of a linear movement of the nozzle needle (4), **characterized in that,** as an actuator for the linear movement of the nozzle needle (4)
• at least two piezo-elements (5, 6; 5a, 6a) which are offset along the longitudinal axis (4a) of the nozzle needle (4) and can be excited to undergo a linear change in length, which is directed to the lateral surface (4b) of the nozzle needle (4), are provided, wherein in each case frictional contact between the piezo-elements (5, 6; 5a, 6a) and the nozzle needle (4) can be brought about or eliminated by this change in length, and wherein the piezo-elements (5, 6; 5a, 6a) are coupled to one another by means of a bending bar (8; 8a) which runs parallel to the nozzle needle (4),
and
• at least one piezo-element (7; 7a) is provided which can be excited to bring about a combination of an extension in length parallel to the longitudinal axis (4) of the nozzle needle (4a) and a flexural vibration, with the result that the flexural vibration can bring about intermittent frictional contact between the piezo element (7; 7a) and the nozzle needle (4),
wherein a control unit (9) for the piezo-elements (5, 6; 5a, 6a) and/or for the piezo-element (7, 7a) is provided, and wherein this control unit (9) is designed to generate a travelling wave (11) which propagates along the bending bar (8, 8a).

2. Dosing device (1) according to Claim 1, **characterized in that** a control unit (9) for the piezo-elements (5, 6; 5a, 6a) and/or for the piezo element (7; 7a) is provided, wherein this control unit (9) is designed to excite at least one point (10) on a piezo-element (5, 6, 5a, 6a, 7, 7a) which can be placed into frictional contact with the nozzle needle (4), to carry out a movement on a two-dimensional closed path (10a).

3. Dosing device (1) according to one of Claims 1 to 2, **characterized in that** at least two piezo-elements (5, 5a; 6, 6a; 7, 7a) are arranged lying opposite one another on each side of the nozzle needle (4).

4. Dosing device (1) according to one of Claims 1 to 3, **characterized in that** at least one clamping element (12, 12a, 12b) is provided and is designed in such a way that it applies a normal force F_{N} acting between at least one piezo-element (5, 6, 5a, 6a, 7, 7a) and the nozzle needle (4) and/or between the nozzle needle (4) and at least one bearing (14a, 14b) on which the nozzle needle (4) rests.

5. Dosing device (1) according to Claim 4, **characterized in that** in addition at least one support element (13, 13a, 13b) is provided which runs around the nozzle needle (4), wherein the clamping element (12, 12a, 12b) presses the supporting element (13, 13a, 13b) against at least one piezo-element (5, 6, 5a, 6a, 7, 7a) and/or against at least one bending bar (8, 8a).

6. Dosing device (1) according to Claim 5, **characterized in that** the supporting element (13, 13a, 13b) has two parts (13a, 13b), and the clamping element presses both parts (13a, 13b) of the supporting element (13a, 13b) against at least one piezo-element (5, 6, 5a, 6a, 7, 7a) and/or against at least one bending bar (8, 8a).

7. Injector for a liquid or gaseous vehicle fuel (2) as a dosing device (1) according to one of Claims 1 to 6.

8. Injector according to Claim 7, **characterized in that** the nozzle needle (4) has a round cross-section which is flattened in the region (4c) in which the piezo-element (7; 7a) and/or the piezo-elements (5, 6; 5a, 6a) can be placed in frictional contact with the nozzle needle (4).

## Revendications

1. Dispositif de dosage (1) pour un milieu liquide ou gazeux électro-isolant (2), comprenant une buse (3) avec un pointeau (4), dans lequel le débit d'écoulement du milieu (2) à travers la buse (3) peut être commandé par un déplacement linéaire du pointeau (4), **caractérisé en ce qu'**il est prévu comme actionneur pour le déplacement linéaire du pointeau (4),
• au moins deux éléments piézoélectriques (5, 6; 5a, 6a) décalés le long de l'axe longitudinal (4a) du pointeau (4), qui peuvent être excités pour un changement de longueur linéaire dirigé vers la face latérale (4b) du pointeau (4), dans lequel on peut, par ce changement de longueur, établir ou supprimer un contact de friction entre les éléments piézoélectriques (5, 6; 5a, 6a) et le pointeau (4) et dans lequel les éléments piézoélectriques (5, 6; 5a, 6a) sont couplés l'un à l'autre par une barre de flexion (8; 8a) s'étendant parallèlement au pointeau (4), et
• au moins un élément piézoélectrique (7; 7a), qui peut être excité pour une combinaison d'un allongement longitudinal parallèle à l'axe longitudinal (4a) du pointeau (4) et d'une vibration de flexion, de telle manière qu'un contact de friction intermittent puisse être établi entre l'élément piézoélectrique (7; 7a) et le pointeau (4) par la vibration de flexion,
dans lequel il est prévu une unité de commande (9) pour les éléments piézoélectriques (5, 6; 5a, 6a) ou pour l'élément piézoélectrique (7; 7a) et dans lequel cette unité de commande (9) est configurée pour produire une onde progressive (11) se propageant le long de la barre de flexion (8, 8a).

2. Dispositif de dosage (1) selon la revendication 1, **caractérisé en ce qu'**il est prévu une unité de commande (9) pour les éléments piézoélectriques (5, 6; 5a, 6a) ou pour l'élément piézoélectrique (7; 7a), dans lequel cette unité de commande (9) est configurée pour exciter au moins un point (10) sur un élément piézoélectrique (5, 6, 5a, 6a, 7, 7a), qui peut être amené en contact de friction avec le pointeau (4), pour un déplacement sur un chemin bidimensionnel fermé (10a).

3. Dispositif de dosage (1) selon une des revendications 1 ou 2, **caractérisé en ce qu'**au moins deux éléments piézoélectriques (5, 5a; 6, 6a; 7, 7a) sont montés en opposition de part et d'autre du pointeau (4).

4. Dispositif de dosage (1) selon l'une quelconque des revendications 1 à 3, **caractérisé en ce qu'**il est prévu au moins un élément de serrage (12, 12a, 12b) et celui-ci est configuré de telle manière qu'il exerce une force normale F_{N} entre au moins un élément piézoélectrique (5, 6, 5a, 6a, 7, 7a) et le pointeau (4), et/ou entre le pointeau (4) et au moins un palier (14a, 14b), sur lequel le pointeau (4) repose.

5. Dispositif de dosage (1) selon la revendication 4, **caractérisé en ce qu'**il est en outre prévu au moins un élément d'appui (13, 13a, 13b), qui entoure le pointeau (4), dans lequel l'élément de serrage (12, 12a, 12b) presse l'élément d'appui (13, 13a, 13b) contre au moins un élément piézoélectrique (5, 6, 5a, 6a, 7, 7a) et/ou contre au moins une barre de flexion (8, 8a).

6. Dispositif de dosage (1) selon la revendication 5, **caractérisé en ce que** l'élément d'appui (13, 13a, 13b) présente deux parties (13a, 13b) et l'élément de serrage presse les deux parties (13a, 13b) de l'élément d'appui (13a, 13b) contre au moins un élément piézoélectrique (5, 6, 5a, 6a, 7, 7a) et/ou contre au moins une barre de flexion (8, 8a).

7. Injecteur pour un carburant de véhicule liquide ou gazeux (2) sous forme de dispositif de dosage (1) selon l'une quelconque des revendications 1 à 6.

8. Injecteur selon la revendication 7, **caractérisé en ce que** le pointeau (4) présente une section transversale ronde, qui est aplatie dans la région (4c), dans laquelle l'élément piézoélectrique (7; 7a), ou les éléments piézoélectriques (5, 6; 5a, 6a) peut/peuvent être amené(s) en contact de friction avec le pointeau (4).
